(19) Europäisches Patentamt
European Patent Office
Office européen des brevets

(11) **EP 3 848 491 A1**

(12) # EUROPEAN PATENT APPLICATION
published in accordance with Art. 153(4) EPC

(43) Date of publication:
**14.07.2021 Bulletin 2021/28**

(21) Application number: **19871662.3**

(22) Date of filing: **15.10.2019**

(51) Int Cl.:
*D04H 3/16* (2006.01)     *A41D 13/11* (2006.01)
*B32B 5/26* (2006.01)     *B32B 27/40* (2006.01)

(86) International application number:
**PCT/JP2019/040477**

(87) International publication number:
**WO 2020/075870 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **12.10.2018 JP 2018193725**

(71) Applicant: **Mitsui Chemicals, Inc.**
**Minato-ku**
**Tokyo 105-7122 (JP)**

(72) Inventors:
• **TAKAKU, Shouichi**
**Nagoya-shi, Aichi 457-8522 (JP)**
• **IIHAMA, Sho**
**Sodegaura-shi, Chiba 299-0265 (JP)**
• **SHIMADA, Koichi**
**Sodegaura-shi, Chiba 299-0265 (JP)**
• **MOTOMURA, Shigeyuki**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **NONWOVEN FABRIC LAMINATE, STRETCHABLE NONWOVEN FABRIC LAMINATE, FIBER PRODUCT, ABSORBENT ARTICLE AND HYGIENIC MASK**

(57)     A multilayer nonwoven fabric includes: a surface layer; an intermediate layer; and a back layer; in this order, wherein the surface layer and the back layer are each independently a spunbonded nonwoven layer comprising a long fiber of a thermoplastic polyurethane elastomer (A) and a long fiber of a thermoplastic resin (B), the intermediate layer is a spunbonded layer comprising 50% by mass or more of a long fiber of a thermoplastic polyurethane elastomer (a), and a storage elastic modulus of the thermoplastic polyurethane elastomer (A) and a storage elastic modulus of the thermoplastic polyurethane elastomer (a) are each independently 25.0 MPa or less.

FIG. 1

**Description**

Technical Field

The present invention relates to a multilayer nonwoven fabric, a stretchable multilayer nonwoven fabric, a fiber product, an absorbent article, and a sanitary mask.

In recent years, nonwoven fabrics are widely used in various applications because of their excellent air breathability and flexibility. For that reason, the nonwoven fabrics require various characteristics in accordance with their applications, and improvements in their characteristics.

For example, excellent waterproofness and moisture permeability are required for nonwoven fabrics which are used for hygiene materials such as disposable diapers and sanitary napkins, and for backings for poultices, and the like. In addition, stretchability and bulkiness are also required depending on the sections to which the fabrics are used.

As the methods of imparting stretchability to a nonwoven fabric, a method of using a thermoplastic elastomer as a raw material of a spunbonded nonwoven fabric (see, for example, Patent Literature 1; JP-ANo. H07-503502), a method of using a mixed fiber of a fiber composed of a thermoplastic polyurethane and a fiber composed of a thermoplastic polymer as fibers forming a nonwoven fabric (see, for example, Patent Literature 2; JP-ANo. 2004-244791), a method of using at least two layers in which the mixed fiber ratios of the long fibers of a thermoplastic elastomer and the long fibers of a thermoplastic resin are different from each other as the layered structure for forming a nonwoven fabric (see, for example, Patent Literature 3; International Publication No. 2008/108230), and although the object is different from imparting stretchability, a long fiber nonwoven fabric made by mixing adhesive fibers composed of a hydrogenated styrene block copolymer and the like and non-adhesive fibers (see, for example, Patent Literature 4; JP-A No. 2004-197291) have been proposed.

In the process of producing hygiene materials such as disposable diapers and sanitary napkins, nonwoven fabrics may be heat-sealed and bonded together. In a case in which an attempt is made to shorten the sealing time in the heat sealing process for the purpose of speeding up the production, there is a problem that the seal strength decrease. In a case in which the sealing temperature is raised, there is a problem that the seal part becomes hard. Therefore, there is a strong demand for a nonwoven fabric that can be heat-sealed at a temperature as low as possible while maintaining a flexible texture.

However, depending on the application, a multilayer nonwoven fabric that has both excellent stretch characteristics and low temperature heat sealability is still desired.

[Patent Literature 1] Japanese National-Phase Publication (JP-A) No. H07-503502

[Patent Literature 2] Japanese Patent Application Laid-Open (JP-A) No. 2004-244791

[Patent Literature 3] International Publication No. 2008/108230

[Patent Literature 4] Japanese Patent Application Laid-Open (JP-A) No. 2004-197291

SUMMARY OF INVENTION

Technical Problem

It is an object of the present disclosure to provide a multilayer nonwoven fabric having excellent stretch characteristics and low temperature heat sealability and a stretchable multilayer nonwoven fabric, a fiber product, an absorbent article, and a sanitary mask using thereof.

Solution to Problem

Means for solving the above-mentioned problems includes the following embodiments.

<1> A multilayer nonwoven fabric, comprising:
a surface layer, an intermediate layer, and a back layer, in this order, wherein:

the surface layer and the back layer are each independently a spunbonded nonwoven layer comprising a long fiber of a thermoplastic polyurethane elastomer (A) and a long fiber of a thermoplastic resin (B),
the intermediate layer is a spunbonded nonwoven layer comprising 50% by mass or more of a long fiber of a thermoplastic polyurethane elastomer (a), and

a storage elastic modulus of the thermoplastic polyurethane elastomer (A) and a storage elastic modulus of the thermoplastic polyurethane elastomer (a) are each independently 25.0 MPa or less.

<2> The multilayer nonwoven fabric according to <1>, wherein the intermediate layer is a spunbonded nonwoven layer comprising 80% by mass or more of the long fiber of the thermoplastic polyurethane elastomer (a).

<3> The multilayer nonwoven fabric according to <1> or <2>, wherein a melting point of the thermoplastic polyurethane elastomer (A) and a melting point of the thermoplastic polyurethane elastomer (a) are each independently 165°C or less.

<4> The multilayer nonwoven fabric according to any one of <1> to <3>, wherein a heat of fusion of the thermoplastic polyurethane elastomer (A) and a heat of fusion of the thermoplastic polyurethane elastomer (a) are each independently 14 mJ/mg or less.

<5> The multilayer nonwoven fabric according to any one of <1> to <4>, wherein a mixed fiber mass ratio of the long fiber of the thermoplastic polyurethane elastomer (A) and the long fiber of a thermoplastic resin (B) in the surface layer or the back layer is from 10:90 to 60:40, where (A) + (B) = 100% by mass.

<6> The multilayer nonwoven fabric according to <5>, wherein the mixed fiber mass ratio is from 50:50 to 60:40 on a mass basis.

<7> The multilayer nonwoven fabric according to any one of <1> to <6>, wherein the thermoplastic resin (B) comprises a polypropylene polymer.

<8> The multilayer nonwoven fabric according to any one of <1> to <7>, wherein the thermoplastic resin (B) consists of a polypropylene polymer and a high density polyethylene, a content of the polypropylene polymer is from 80% by mass to 99% by mass with respect to a total of the polypropylene polymer and the high density polyethylene, and a content of the high density polyethylene is from 1% by mass to 20% by mass with respect to a total of the polypropylene polymer and the high density polyethylene.

<9> A stretchable multilayer nonwoven fabric obtained by drawing the multilayer nonwoven fabric according to any one of <1> to <8>.

<10> A fiber product comprising the multilayer nonwoven fabric according to any one of <1> to <8> or the stretchable multilayer nonwoven fabric according to <9>.

<11> An absorbent article comprising the multilayer nonwoven fabric according to any one of <1> to <8> or the stretchable multilayer nonwoven fabric according to <9>.

<12> A sanitary mask comprising the multilayer nonwoven fabric according to any one of <1> to <8> or the stretchable multilayer nonwoven fabric according to <9>.

Advantageous Effects of Invention

The present disclosure provides a multilayer nonwoven fabric having excellent stretch characteristics and low temperature heat sealability and a stretchable multilayer nonwoven fabric, a fiber product, an absorbent article, and a sanitary mask using thereof.

BRIEF DESCRIPTION OF DRAWINGS

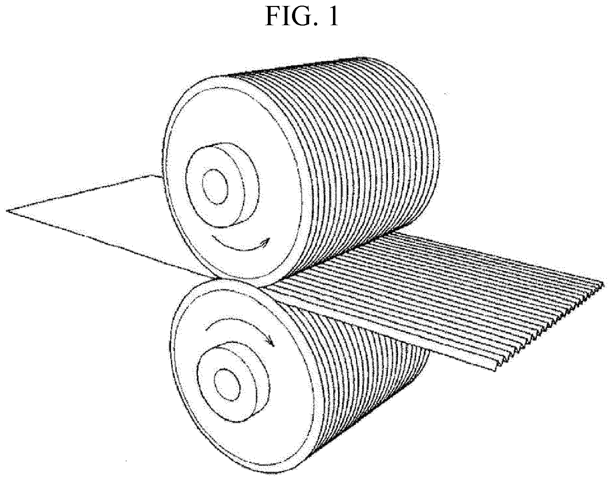

Fig. 1 is a schematic diagram of a gear stretching device.

DESCRIPTION OF EMBODIMENTS

In the present disclosure, numerical ranges indicated using "to" mean a range including the numerical values described before and after "to" as the lower limit value and the upper limit value, respectively.

In the present disclosure, a long fiber indicates a fiber having a fiber length of 30 mm or more

[Multilayer Nonwoven Fabric]

A multilayer nonwoven fabric in the present disclosure includes: a surface layer, an intermediate layer, and a back layer, in this order, the surface layer and the back layer are each independently a spunbonded nonwoven layer comprising a long fiber of a thermoplastic polyurethane elastomer (A) and a long fiber of a thermoplastic resin (B), the intermediate layer is a spunbonded nonwoven layer including 50% by mass or more of a long fiber of a thermoplastic polyurethane elastomer (a), and a storage elastic modulus of the thermoplastic polyurethane elastomer (A) and a storage elastic modulus of the thermoplastic polyurethane elastomer (a) are each independently 25.0 MPa or less. Herein, the multilayer nonwoven fabric in the present disclosure may include another layer other than the surface layer, the intermediate layer or the back layer.

Hereinafter, the composition for forming the spunbonded nonwoven fabric layer in the present disclosure will be described.

<Thermoplastic Polyurethane Elastomer (A) and Thermoplastic Polyurethane Elastomer (a)>

As a thermoplastic polyurethane elastomer (A), which is a raw material for a long fiber of a thermoplastic polyurethane elastomer (A) which is one of fiber components forming the surface layer and the back layer in the present disclosure, various known thermoplastic polyurethane elastomers can be used, and two or more kinds of thermoplastic polyurethane elastomers may be used together.

As a preferable aspect of a long fiber of a thermoplastic polyurethane elastomer (a) which is one of fiber components forming the intermediate layer in the present disclosure, a preferred aspect of the long fiber of the thermoplastic polyurethane elastomer (A) can be appropriately applied. The long fiber of the thermoplastic polyurethane elastomer (a) forming the intermediate layer may be the same as or may be different from the long fiber of the thermoplastic polyurethane elastomer (A) forming the surface layer and the back layer.

Hereinafter, the spunbonded nonwoven fabric layer in the present disclosure, using at least two kinds of resins or elastomers is also referred to as "mixed fiber spunbonded nonwoven fabric".

In the present disclosure, examples of the thermoplastic polyurethane elastomer include a material in which at least polyurethane forms a hard segment forming pseudo crosslinking by physical agglomeration, and another polymer forms an amorphous soft segment with low glass transition temperature.

Examples of the thermoplastic polyurethane elastomer include a polyurethane-based thermoplastic elastomer (TPU) specified in JIS K6418: 2007.

A storage elastic modulus of the thermoplastic polyurethane elastomer in the present disclosure is 25.0 MPa or less. The storage elastic modulus in the present disclosure means a storage elastic modulus at 23°C. Hereinafter, the storage elastic modulus at 23°C is also referred to as "E' @ 23°C"

In a case in which the storage elastic modulus of the thermoplastic polyurethane elastomer (A) is more than 25.0 MPa, stretch characteristics of the multilayer nonwoven fabric tends to deteriorate. From the viewpoint of improving stretch characteristics of the multilayer nonwoven fabric, the storage elastic modulus of the thermoplastic polyurethane elastomer (A) is preferably 22.0 MPa or less, and more preferably 18.0 MPa or less.

The storage elastic modulus of the thermoplastic polyurethane elastomer (A) can also affect stretch characteristics of the multilayer nonwoven fabric in the surface layer and the back layer.

The measurement of a storage elastic modulus of a thermoplastic polyurethane elastomer (A) used in the multilayer nonwoven fabric in the present disclosure is performed by the following

Equipment: RSA-III (manufactured by TA Instruments)
Deformation mode: Pulling mode
Temperature range: -20°C to 120°C
Temperature increasing rate: 2°C/min
Deformation frequency: 10 Hz
Initial distortion: 0.1%
Measurement temperature interval: 0.3°C
Environment: under nitrogen atmosphere

A melting point of a thermoplastic polyurethane elastomer (A) is defined as the peak top of the peak observed on the highest side of a melting endothermic curve obtained by being held at - 100°C for 5 minutes under a nitrogen atmosphere and thereafter heated at a temperature increasing rate of 10°C/min, using a differential scanning calorimeter (DSC). Specifically, the melting point can be determined by using a differential scanning calorimeter (DSC-7, manufactured by Perkin Elmer), holding 5 mg of a sample at -100°C under a nitrogen atmosphere for 5 minutes, thereafter heating the sample at a temperature increasing rate of 10°C/min to obtain a melting endothermic curve, and determining the temperature as the peak top of the peak observed on the highest temperature side of the curve.

From the viewpoint of improving low temperature heat sealability, the melting point of a thermoplastic polyurethane elastomer (A) used in the multilayer nonwoven fabric in the present disclosure is preferably 165°C or less, and more preferably 163°C or less.

A heat of fusion of a thermoplastic polyurethane elastomer (A) is defined as a heat of fusion at the largest endothermic peak in a melting endothermic curve obtained by being held at - 100°C for 5 minutes under a nitrogen atmosphere and thereafter heated at a temperature increasing rate of 10°C/min, using a differential scanning calorimeter (DSC). Specifically, the heat of fusion can be determined by using a differential scanning calorimeter (DSC-7, manufactured by Perkin Elmer), holding 5 mg of a sample at -100°C under a nitrogen atmosphere for 5 minutes, thereafter heating the sample at a temperature increasing rate of 10°C/min to obtain a melting endothermic curve, and determining the

**EP 3 848 491 A1**

largest endothermic peak in the obtained melting endothermic curve.

From the view point of improving low temperature heat sealability, the heat of fusion of a thermoplastic polyurethane elastomer (A) used in the multilayer nonwoven fabric in the present disclosure is preferably from 14.0 mJ/mg or less, and more preferably 12.0 mJ/mg or less.

Among the thermoplastic polyurethane elastomers (A) in the present disclosure, A thermoplastic polyurethane elastomer having a solidification starting temperature of preferably 65°C or more, more preferably 75°C or more, and further preferably 85°C or more may be used. The upper limit of solidification starting temperature is preferably 195°C. Here, the solidification starting temperature is a value measured using a differential scanning calorimeter (DSC), and is the starting temperature of an exothermic peak derived from the solidification of the thermoplastic polyurethane elastomer occurring in a case in which the temperature of the thermoplastic polyurethane elastomer is decreased at a rate of 10°C/min after the temperature of the thermoplastic polyurethane elastomer is increased at a rate of 10°C/min to 230°C and kept at 230°C for 5 min. In a case in which the solidification starting temperature is 65°C or more, it is possible to suppress defective molding such as fusion of fibers, filament breakage, massed resin in obtaining a mixed fiber spunbonded nonwoven fabric, and also it is possible to prevent the molded mixed fiber spunbonded nonwoven fabrics from being wound around the emboss roller in thermal emboss processing. The obtained mixed fiber spunbonded nonwoven fabrics have less stickiness, and are suitably used as materials that come in contact with skin such as clothes, hygiene materials, and materials of sporting goods. On the other hand, by setting the solidification starting temperature to 195°C or less, the molding processability can be improved. The solidification starting temperature of the molded fiber tends to be higher than the solidification starting temperature of the thermoplastic polyurethane elastomer used for the fiber.

In order to adjust the solidification starting temperature of the thermoplastic polyurethane elastomer to 65°C or higher, it is necessary to select a polyol, an isocyanate compound, and a chain extender each having an optimum chemical structure, which are used as raw materials for the thermoplastic polyurethane elastomer, and to adjust a hard segment amount. The term "hard segment amount" as used herein is a mass percent value (% by mass) determined by dividing the total mass of the isocyanate compound and the chain extender used is in the production of the thermoplastic polyurethane elastomer by the total amount of the polyol, the isocyanate compound, and the chain extender, and multiplying the resulting value by 100. The hard segment amount is preferably from 20% by mass to 60% by mass, more preferably from 22% by mass to 50% by mass, and further preferably from 25% by mass to 48% by mass.

The thermoplastic polyurethane elastomer has the number of particles as components insoluble in a polar solvent of preferably 3,000,000 particles/g or less, more preferably 2,500,000 particles/g or less, and further preferably 2,000,000 particles/g or less. Here, the components insoluble in the polar solvent in the thermoplastic polyurethane elastomer are mainly agglomerates such as fish eye and gel occurring during the production of the thermoplastic polyurethane elastomer. Examples of the agglomerates include components caused by the raw materials composing the thermoplastic polyurethane elastomer and by a chemical reaction between these raw materials such as components derived from hard segment agglomerates of the thermoplastic polyurethane elastomer, and components obtained by crosslinking the hard segment and/or the soft segment with an allophanate bond or a biuret bond and the like.

The number of particles as the components insoluble in the polar solvent is determined by dissolving the thermoplastic polyurethane elastomer in a dimethylacetamide solvent (hereinafter abbreviated as "DMAC") and measuring the insoluble components by means of a particle size distribution measuring apparatus equipped with a 100 μm aperture utilizing a pore electrical resistance method. Using the apparatus equipped with a 100 μm aperture, the number of particles of from 2 μm to 60 μm can be measured in terms of uncrosslinked polystyrene.

By setting the number of particles as the components insoluble in the polar solvent to 3,000,000 particles or less with respect to 1 g of the thermoplastic polyurethane elastomer, problems such as an increase in a distribution of a fiber diameter, and filament breakage in spinning can be further suppressed in the solidification starting temperature range of the thermoplastic polyurethane elastomer. From the viewpoint of suppressing mingling of bubbles into a strand or occurrence of filament breakage in the molding of nonwoven fabrics using a large-size spunbonding molding machine, a water content of the thermoplastic polyurethane elastomer is preferably 350 ppm or less, more preferably 300 ppm or less, and further preferably 150 ppm or less.

From the viewpoint of stretchability, in the thermoplastic polyurethane elastomer, a total amount (a) of a heat of fusion determined from an endothermic peak at a peak temperature in a range of 90°C to 140°C and a total amount (b) of a heat of fusion determined from an endothermic peak at a peak temperature of from higher than 140°C to 220°C or less, which are observed during thermal analysis using a differential scanning calorimetry (DSC), preferably satisfy the following formula (I), more preferably satisfy the following formula (II), and further preferably satisfy the following formula (III).

$$a/(a+b) \leq 0.8 \qquad (I)$$

5

$$a/(a+b) \leq 0.7 \quad \text{(II)}$$

$$a/(a+b) \leq 0.55 \quad \text{(III)}$$

Here, "a/(a + b)" means a ratio (unit: %) of the heat of fusion of the hard domain of the thermoplastic polyurethane elastomer. In a case in which the ratio of the heat of fusion of the hard domain of the thermoplastic polyurethane elastomer is 80% or less, the strength and stretchability of the fiber, particularly the fiber and nonwoven fabric in the mixed fiber spunbonded nonwoven fabric are improved. In the present disclosure, the lower limit of the ratio of the heat of fusion of the hard domain of the thermoplastic polyurethane elastomer is preferably about 0.1%.

From the viewpoint of suppressing occurrence of filament breakage, a melt viscosity of the thermoplastic polyurethane elastomer is preferably from 100 Pa·s to 3000 Pa·s, more preferably from 200 Pa·s to 2000 Pa·s, and further preferably from 1000 Pa·s to 1500 Pa·s, under conditions of a temperature of 200°C and a shear rate of 100 sec$^{-1}$. Herein, the melt viscosity is a value measured by a capirograph (manufactured by Toyo Seiki Co., Ltd., nozzle length: 30 mm, diameter: 1 mm).

The thermoplastic polyurethane elastomer having such characteristics can be obtained by, for example, the production method described in JP-ANo. 2004-244791.

Since the spunbonded nonwoven fabric formed by using the above-mentioned thermoplastic polyurethane elastomer has an excellent tactile feeling, for example, it can be suitably used as a hygiene material. The above-mentioned thermoplastic polyurethane elastomer with low components insoluble in the polar solvent, at the time of producing the above spunbonded nonwoven fabric, hardly causes clogging of a filter that is mounted in an extruder in order to filter impurities and the like, and reduces the frequency of adjustment and maintenance for equipment. Therefore, as described below, the above-mentioned thermoplastic polyurethane elastomer obtained by carrying out a polymerization reaction of a polyol, an isocyanate compound and a chain extender and then filtering, is industrially preferable.

<Thermoplastic Resin (B)>

As a thermoplastic resin (B) which is a raw material for a long fiber composed of a thermoplastic resin which is one of components forming the mixed fiber spunbonded nonwoven fabric composing at least surface layer and back layer of the multilayer nonwoven fabric in the present disclosure, various known thermoplastic resins other than the thermoplastic polyurethane elastomer (A) can be used. For example, a crystalline polymer having a melting point (Tm) of 100°C or more measured using DSC, an amorphous polymer having a glass transition temperature of 100°C or more, and the like can be mentioned. Among these thermoplastic resins (B), crystalline thermoplastic resin is preferable.

Among the thermoplastic resins (B), a maximum point elongation of nonwoven fabric obtained by producing by a known method for producing a spunbonded nonwoven fabric is preferably 50% or more, preferably 70% or more, and more preferably 100% or more. Further, the thermoplastic resins (B) is preferably a thermoplastic resin (extensible thermoplastic resin) having quite low elastic recoverability. By using such a thermoplastic resin (extensible thermoplastic resin), a mixed fiber spunbonded nonwoven fabric obtained by mixing long fibers of the thermoplastic polyurethane elastomer (A), the multilayer nonwoven fabric obtained by stacking the mixed fiber spunbonded nonwoven fabric, and the like can exhibit bulkiness due to stretching, can have improved tactile feeling and can give an extension stop function to the multilayer nonwoven fabric. The upper limit of the maximum point elongation of the spunbonded nonwoven fabric composed of the thermoplastic resin (B) is not necessarily limited, but it is usually 300% or less.

Specific examples of the thermoplastic resin (B) include polyolefins, which are homopolymers or copolymers of α-olefins including ethylene, propylene, 1-butene, 1-hexene, 4-methyl-1-pentene, and 1-octene, including polyolefins such as high pressure low density polyethylene, linear low density polyethylene (so-called LLDPE), high density polyethylene (so-called HDPE), polypropylene (propylene homopolymer), polypropylene random copolymer, poly 1-butene, poly 4-methyl-1-pentene, ethylene propylene random copolymer, ethylene·1-butene random copolymer, propylene·1-butene random copolymer and ethylene·propylene·1-butene random copolymer; polyesters (polyethylene terephthalate, polybutylene terephthalate, polyethylene naphthalate etc.); polyamide (nylon-6, nylon-66, polymetaxyleneadipamide, etc.); polyvinyl chloride; polyimide; ethylene·vinyl acetate copolymer; ethylene·vinyl alcohol copolymer; ethylene(meth)acrylic acid copolymer; ethylene-acrylic ester-carbon monoxide copolymer; polyacrylonitrile; polycarbonate; polystyrene; ionomer, and mixtures threof. Of these, high pressure low density polyethylene, linear low density polyethylene (so-called LLDPE), high density polyethylene, propylene polymers such as polypropylene and polypropylene random copolymer, polyethylene terephthalate, and polyamide are preferable. These thermoplastic resins (B) may be used alone or in combination of two or more.

Note that a (meth) acrylic acid means an acrylic acid or a methacrylic acid.

Among these thermoplastic resins (B), from the viewpoint of spinning stability during molding and stretching processability of the nonwoven fabric, a polyolefin is preferable and a propylene polymer is more preferable.

In the present disclosure. the propylene polymer means a polymer including 50 mol% or more of structural units derived from propylene.

As the propylene polymer, a propylene homopolymer or a copolymer of propylene and one kind or two kinds or more $\alpha$-olefins of more than 0 mol% and 10 mol% or less with respect to the total of propylene and the $\alpha$-olefin(s) is preferable. $\alpha$-olefins are preferably $\alpha$-olefins having 2 or more carbon atoms (excluding 3 carbon atoms) such as ethylene, 1-butene, 1-pentene, 1-hexene, 1-octene, and 4-methyl-1-pentene, more preferably $\alpha$-olefins having 2 to 20 carbon atoms (excluding 3 carbon atoms), further preferably $\alpha$-olefins having 2 to 8 carbon atoms (excluding 3 carbon atoms), and particularly preferably ethylene.

A melting point of a propylene homopolymer or a copolymer of propylene and the above $\alpha$-olefin(s) measured using DSC is preferably 120°C or more, more preferably 140°C or more, further preferably from 155°C to 175°C, and particularly preferably from 157°C to 165°C.

The melting point of a propylene homopolymer, a copolymer of propylene and the above $\alpha$-olefin(s), and a propylene homopolymer (a-1) and a propylene homopolymer (a-2) described later is defined as the peak top of the peak observed on the highest side of a melting endothermic curve obtained by being held at -40°C for 5 minutes under a nitrogen atmosphere and thereafter heated at a temperature increasing rate of 10°C/min, using a differential scanning calorimeter (DSC). Specifically, the melting point can be determined by using a differential scanning calorimeter (DSC-7, manufactured by Perkin Elmer), holding 5 mg of a sample at -40°C under a nitrogen atmosphere for 5 minutes, thereafter heating the sample at a temperature increasing rate of 10°C/min to obtain a melting endothermic curve, and determining the temperature as the peak top of the peak observed on the highest temperature side of the curve.

A melt flow rate (ASTM D1238, 230°C, load: 2.16 kg) of a propylene polymer is not particularly limited as long as it can be melt-spun. For example, the melt flow rate of a propylene polymer is preferably from 1 g/10 min to 1000 g/10 min, more preferably from 5 g/10 min to 500 g/10 min, and further preferably from 10 g/10 min to 100 g/10 min. A molecular weight distribution (Mw/Mn) of a propylene polymer is preferably from 1.5 to 5.0. From the view point of obtaining fibers having good spinnability and excellent fiber strength, Mw/Mn is more preferably from 1.5 to 3.0. A weight average molecular weight (Mw) and a number average molecular weight (Mn) can be measured by using GPC (gel permeation chromatography) in accordance with the known method.

In the present disclosure, good spinnability means that filament breakage is not caused and filament fusion is not caused during discharging from a spinning nozzle and during stretching.

The thermoplastic resin (B) may include two kinds of propylene polymers having different melting points as the propylene polymer, or may be composed of two kinds of propylene polymers having different melting points. Hereinafter, regarding two kinds of propylene polymers having different melting points, the propylene polymer having a higher melting point is referred to as a propylene polymer (a-1), and the propylene polymer having a lower melting point is referred to as a propylene polymer (a-2).

A melting point of the propylene polymer (a-1) is preferably from 120°C to 175°C, or a melting point of the propylene polymer (a-2) is preferably from 110°C to 165°C.

The melting point of the propylene polymer (a-1) measured using DSC is preferably higher than that of the propylene polymer (a-2) by 10°C or more, and more preferably 20°C or more.

A ratio (propylene polymer (a-2)/ propylene polymer (a-1)) of MFR of the propylene polymer (a-2) with respect to MFR of the propylene polymer (a-1) is preferably from 0.7 to 1.5, more preferably from 0.8 to 1.2, and further preferably from 0.9 to 1.1.

A mass ratio (propylene polymer (a-2)/ propylene polymer (a-1)) of the propylene polymer (a-1) with respect to the propylene polymer (a-2) is preferably from 50/50 to 5/95, more preferably from 40/60 to 10/90 and further preferably from 30/70 to 10/90.

The propylene polymer (a-1) is preferably a propylene homopolymer. The propylene polymer (a-2) is preferably a copolymer of propylene and one kind or two kinds or more $\alpha$-olefins of more than 0 mol% and 10 mol% or less with respect to the total of propylene and the $\alpha$-olefin(s). The $\alpha$-olefin in the propylene polymer (a-2) is not particularly limited as long as it is not propylene, and for example, ethylene, 1-butene, 1-pentene, 1-hexene, 1-octene, and 4-methyl-1-pentene are preferable and ethylene is more preferable.

From the viewpoint of stretching processing properties of the obtained multilayer nonwoven fabric, as a propylene polymer, the thermoplastic resin (B) may include at least one of a copolymer of propylene and the above-mentioned $\alpha$-olefin or a polyolefin (except for a copolymer of propylene and the above-mentioned $\alpha$-olefin), or may include at least one of a copolymer of propylene and the above-mentioned $\alpha$-olefin or a polyolefin (except for a propylene homopolymer having a melting point of 120°C or more, and a copolymer of propylene and the above-mentioned $\alpha$-olefin), in addition to a propylene homopolymer having a melting point of 120°C or more. Examples of the polyolefins shown here include the polyolefins listed above, the polyolefins included in the sheath-core composite fiber described later, and propylene homopolymers having a melting point of less than 120°C satisfying the following (a) to (f). Herein, the copolymer of propylene and the above-mentioned $\alpha$-olefin and the polyolefin may be independently used alone or in combination of two or more.

> (a) [mmmm] = 20 to 60 mol%
> (b) [rrrr]/(1 - [mmmm]) $\leq$ 0.1
> (c) [rmrm] > 2.5 mol%
> (d) [mm] $\times$ [rr]/[(mr)]$^2$ $\leq$ 2.0
> (e) weight-average molecular weight (Mw) = 10,000 to 200,000
> (f) molecular weight distribution (Mw/Mn) < 4.

In (a) to (d), [mmmm] is a mesopentad fraction; [rrrr] is a racemic pentad fraction; [rmrm] is a racemic meso racemic mesopentad fraction; and [mm], [rr] and [mr] are triad fractions. Each of these fractions can be calculated in accordance with the method proposed in A. Zambelli, et al., "Macromolecules, 6, 925 (1973)".

Examples of propylene homopolymers having a melting point of less than 120°C satisfying the following (a) to (f) include a polymer (II) described in International Publication No. 2017/006972.

In a case in which the thermoplastic resin (B) includes two or more kinds of polymers, for example, in a case in which the thermoplastic resin (B) includes two or more kinds of propylene polymers, from the viewpoint of improving stretch characteristics, a long fiber of the thermoplastic resin (B) may be a composite fiber having substantially separate regions in a cross section perpendicular to the length direction, and the separate regions exist along the length direction. Examples of such a composite fiber include a sheath-core composite fiber, a side-by-side type composite fiber, and a sandwich type composite fiber. The sheath-core composite fiber may be an eccentric sheath-core composite fiber in which the centers of the core portion and the sheath portion are out of alignment in the fiber cross section, or the eccentric sheath-core composite fiber includes an eccentric type in which the core portion and the core of the sheath portion are misaligned and the core portion is wrapped in the sheath portion, and a parallel type in which the eccentric core portion is not wrapped in the sheath portion. Such a composite fiber can be produced, for example, by the method described in JP-A No. 2005-205744.

The sheath-core composite fiber may be a composite fiber including the sheath portion composed of a polyolefin having a weight average molecular weight (Mw) of less than about 65,000 g/mol, and a core portion including a polymer in which Mw is at least about 20,000 g/mol larger than the Mw of the polyolefin composing the sheath portion. Examples of the fiber composing the core portion include homopolymers or copolymers such as $\alpha$-olefins such as propylene and ethylene, styrene, (meth)acrylic acid, and (meth)acrylic acid ester, and combinations thereof. Examples of the sheath-core composite fiber include a two-component polymer fiber having a core including a core polymer and a sheath including a sheath polymer described in JP-A No. 2014-502315.

An olefin polymer composition made by adding HDPE to a propylene polymer is preferable because the stretching processing properties of the obtained multilayer nonwoven fabric is further improved. From the viewpoint of spinnability and stretching processability, a content of HDPE is preferably from 1% by mass to 20% by mass, more preferably from 2% by mass to 15% by mass, and further preferably from 4% by mass to 10% by mass, with respect to 100% by mass of the total of the propylene polymer and HDPE. From the viewpoint of spinnability and stretching processability, a content of the propylene polymer is preferably from 80% by mass to 99% by mass, more preferably from 85% by mass to 98% by mass, and further preferably from 90% by mass to 96% by mass, with respect to 100% by mass of the total of the propylene polymer and HDPE.

HDPE to be added to the propylene polymer is not particularly limited.

A density of HDPE is preferably from 0.94 g/cm$^3$ to 0.97 g/cm$^3$, more preferably from 0.95 g/cm$^3$ to 0.97 g/cm$^3$, and further preferably from 0.96 g/cm$^3$ to 0.97 g/cm$^3$.

A melt flow rate (MFR: ASTM D-1238, 190°C, load: 2160 g) of HDPE, which is not particularly limited as long as it has spinnability. From the viewpoint of exhibiting extension properties, for example, the melt flow rate of HDPE is preferably from 0.1 g/10 min to 100 g/10 min, more preferably from 0.5 g/10 min to 50 g/10 min, and further preferably from 1 g/10 min to 30 g/10 min.

<Additive>

In the present disclosure, as optional components, various stabilizers such as a heat-resistant stabilizer and a weather-resistant stabilizer, an antistatic agent, a slip agent, an antifogging agent, a lubricant, a dye, a pigment, a natural oil, synthetic oil, wax, a filler and the like, can be independently added to a fiber and a mixed fiber spunbonded nonwoven fabric. These may be used alone or in combination of two or more.

Examples of stabilizers include anti-aging agents such as 2,6-di-t-butyl-4-methylphenol (BHT); phenolic antioxidants such as tetrakis [methylene-3- (3,5-di-t-butyl-4-hydroxyphenyl) propionate] methane, 6-(3,5-di-t-butyl-4-hydroxyphenyl) propionic acid alkyl ester, 2,2'-oxamidbis [ethyl-3- (3,5-di-t-butyl-4-hydroxyphenyl)] propionate and Irganox 1010 (hindered phenolic antioxidant: trade name); fatty acid metal salts such as zinc stearate, calcium stearate, and calcium 1,2-hydroxystearate; polyhydric alcohol fatty acid esters such as glycerin monostearate, glycerin distearate, pentaerythritol monostearate, pentaerythritol distearate, and pentaerythritol tristearate. These may be used alone or in combination of two or more.

Examples of lubricants include fatty acid amides having 15 to 22 carbon atoms such as palmitic acid amide, oleic acid amide, erucic acid amide, and stearic acid amide.

Examples of fillers include silica, diatomite, alumina, titanium oxide, magnesium oxide, pumice powder, pumice balloon, aluminum hydroxide, magnesium hydroxide, basic magnesium carbonate, dolomite, calcium sulphate, potassium titanate, barium sulphate, calcium sulfite, talc, clay, mica, asbestos, calcium silicate, montmorillonite, bentonite, graphite, aluminum powder, and molybdenum sulfide.

Hereinafter, the surface layer, the intermediate layer, and the back layer which compose the multilayer nonwoven fabric will be described.

(Surface Layer and Back Layer)

The surface layer and the back layer in the present disclosure are each independently a spunbonded nonwoven layer including a long fiber of the thermoplastic polyurethane elastomer (A) and a long fiber of the thermoplastic resin (B).

A content of long fibers of the thermoplastic polyurethane elastomer (A) included in the surface layer and the back layer is preferably 60% by mass or less and more preferably 58% by mass or less, with respect to the total amount of long fibers composing each layer.

The configurations of the surface layer and the back layer in the present disclosure may be the same or different from each other. For example, when the configurations of the surface layer and the back layer are different from each other, for example, in the surface layer and the back layer in the present disclosure, the long fibers of the thermoplastic polyurethane elastomer (A), the long fibers of the thermoplastic resin (B), their content ratios, and the like may be different.

In a case in which the content of long fibers of the thermoplastic polyurethane elastomer (A) included in the surface layer and the back layer is 60% by mass or less, since it is possible to suppress defects in the production of spunbonded nonwoven fabric due to the adhesiveness of thermoplastic polyurethane elastomer (A), it tends to be excellent in continuous moldability (does not adhere to a molding machine or the like). For the same reason, the content of long fibers of the thermoplastic polyurethane elastomer (A) included in the surface layer and the back layer is preferably 58% by mass or less.

On the other hand, form the viewpoint of maintaining stretch characteristics, the content of long fibers of the thermoplastic polyurethane elastomer (A) included in the surface layer and the back layer is 10% by mass or more, more preferably 20% by mass or more, further preferably 30% by mass or more, and particularly preferably 40% by mass or more.

From the viewpoint of improving stretch characteristics, a mixed fiber mass ratio (longs fibers of thermoplastic polyurethane elastomer (A): longs fibers of thermoplastic resin (B)) of longs fibers of the thermoplastic polyurethane elastomer (A) and longs fibers of the thermoplastic resin (B) in the surface layer and the back layer, is preferably from 10:90 to 60:40 (with the proviso that (A) + (B) = 100% by mass), and more preferably from 50:50 to 60:40 (with the proviso that (A) + (B) = 100% by mass). In the surface layer and back layer of the multilayer nonwoven fabric in the present disclosure, a mixed fiber mass ratio of longs fibers of the thermoplastic polyurethane elastomer (A) and longs fibers of the thermoplastic resin (B) may be the same or may be different from each other.

In the surface layer (hereinafter, also referred to as "surface layer (C-1)") and the back layer (hereinafter, also referred to as "back layer (C-2)") sandwiching the intermediate layer (hereinafter, also referred to as "intermediate layer (D-1)"), mixed fiber ratios of long fibers of the thermoplastic polyurethane elastomer (A) may be the same or may be different from each other. From the viewpoint of suppressing a curl after stacking and improving moldability, it is preferable that mixed fiber ratios are the same or a difference in mixed fiber ratios are low.

More specifically, from the viewpoint of an improvement of curl resistance after stacking, and improvements of the productivity and production efficiency of the multilayer nonwoven fabric, an absolute value of the difference in the mixed fiber rates mentioned above in the surface layer (C-1) and the back layer (C-2) is preferably 40% by mass or less, more preferably 30% by mass or less, further preferably 20% by mass or less, and particularly preferably from 0% by mass to 10% by mass. From the viewpoint of an improvement of curl resistance after stacking, and improvements of the productivity and production efficiency of the multilayer nonwoven fabric, a ratio (back layer (C-2)/surface layer (C-1)) of a basis weight of the back layer (C-2) with respect to a basis weight of the surface layer (C-1) is preferably from 2 to 0.5, more preferably from 1.5 to 0.67, further preferably from 1.2 to 0.83, and particularly preferably from 1.1 to 0.91.

By making the mixed fiber ratio of long fibers of the thermoplastic polyurethane elastomer (A) higher, elasticity, flexibility, and the like of the obtained mixed fiber spunbonded fabric are improved. On the other hand, by making the mixed fiber ratio of long fibers of the thermoplastic polyurethane elastomer (A) smaller, it is possible to suppress wrapping around molding equipment (a roll, a nonwoven fabric collection belt) of the obtained mixed fiber spunbonded fabric.

As mentioned above, by changing the mixed fiber ratio of long fibers of the thermoplastic polyurethane elastomer (A) composing the surface layer and the back layer, it is possible to adjust quality and moldability of the obtained mixed fiber spunbonded fabric. Therefore, the mixed fiber ratio may be changed for each layer in order to obtain the multilayer nonwoven fabric having elasticity, flexibility, good tactile feeling and good moldability.

The mixed fiber ratio means a ratio of a specific type of fiber in the nonwoven fabric layer made by mixing two or more kinds of fibers, or a mixing ratio of various fibers in the nonwoven fabric layer. In other words, "the mixed fiber ratio of long fibers of the thermoplastic polyurethane elastomer (A)" in the spunbonded nonwoven layer composed of the thermoplastic polyurethane elastomer (A) and the thermoplastic resin (B) means {mass of long fibers of the thermoplastic polyurethane elastomer (A) ÷ (mass of long fibers of the thermoplastic polyurethane elastomer (A) + mass of long fibers of the thermoplastic resin (B))}. "the mixed fiber ratio of long fibers of the thermoplastic resin (B)" means {mass of long fibers of the thermoplastic resin (B) ÷ (mass of long fibers of the thermoplastic polyurethane elastomer (A) + mass of long fibers of the thermoplastic resin (B))}. "The mixed fiber ratios are different" in the spunbonded nonwoven fabric layers composed of the thermoplastic polyurethane elastomer (A) and the thermoplastic resin (B) means that the mixing ratios of (A) and (B) in each nonwoven fabric layer are different.

(Intermediate Layer)

The intermediate layer in the present disclosure is a spunbonded nonwoven layer including 50% by mass or more of a long fiber of a thermoplastic polyurethane elastomer (a). When the spunbonded nonwoven fabric layer forming the intermediate layer includes 50% by mass or more of the long fibers of the thermoplastic polyurethane elastomer (a), good stretch characteristics can be easily obtained. From the viewpoint of improving stretch characteristics, the intermediate layer preferably include 70% by mass or more, more preferably include 80% by mass or more, and further preferably include 90% by mass or more of the long fibers of the thermoplastic polyurethane elastomer (a), and is particularly preferably composed only of the long fibers of the thermoplastic polyurethane elastomer (a).

In addition, the intermediate layer may include a fiber other than the thermoplastic polyurethane elastomer (a) as long as the stretch characteristics are not impaired. The fiber other than the thermoplastic polyurethane elastomer (a) is not particularly limited, and the above-mentioned thermoplastic resin (B), other elastomer resin and the like are preferable, and the above-mentioned thermoplastic resin (B) is more preferable.

The long fiber of the thermoplastic polyurethane elastomer (a) included in the spunbonded non-woven fabric layer that forms the intermediate layer may be the same as or different from the long fiber of the thermoplastic polyurethane elastomer (A) included in the surface layer and/or the back layer. The layer structure of the intermediate layer in the present disclosure may be the same as or different from that of the surface layer or the back layer, and further, each layer structure of the intermediate layer, the surface layer, and the back layer may be the same or different.

The above-mentioned intermediate layer (D-1) of the multilayer nonwoven fabric is preferably composed of the long fibers of the thermoplastic polyurethane elastomer (a). In this case, by utilizing the flexibility and stretch characteristics of the thermoplastic polyurethane elastomer (A), and in the front layer (C-1) and the back layer (C-2), by utilizing continuous moldability (does not stick to a molding machine, or the like) caused by the non-adhesiveness of the thermoplastic resin (B), it is possible to obtain a multilayer nonwoven fabric having excellent stretch characteristics and excellent continuous moldability. In the configuration composed only of the intermediate layer (D-1) and not having the front layer (C-1) and the back layer (C-2), in other words, a nonwoven fabric composed only of the thermoplastic polyurethane elastomer (a), adhesion to the molding machine or the like occurs due to the adhesiveness of the thermoplastic polyurethane elastomer (a), and the desired nonwoven fabric cannot be collected.

(Another Layer)

In the multilayer nonwoven fabric in the present disclosure, another layer may be stacked depending on various uses.

Specific examples of another layer include a knitted fabric, a woven fabric, a nonwoven fabric, and a film. In a case in which another layer is stacked on the multilayer nonwoven fabric in the present disclosure, another layer may be stacked on the multilayer nonwoven fabric in the present disclosure by various known methods such as a thermal fusion method such as thermal embossing or ultrasonic fusion; a mechanical confounding method such as needle punch or water jet; a method of using an adhesive such as a hot melt adhesive or a urethane adhesive; and extrusion laminating may be employed.

Examples of the nonwoven fabric stacked on the multilayer nonwoven fabric in the present disclosure include various known nonwoven fabric such as a spunbonded nonwoven fabric, a meltblown nonwoven fabric, a wet nonwoven fabric, a dry nonwoven fabric, a dry pulp nonwoven fabric, a flash spun nonwoven fabric, and a split non-woven fabric.

Examples of the film stacked on the multilayer nonwoven fabric in the present disclosure include a moisture permeable film and an air breathable film.

A basis weight of the multilayer nonwoven fabric in the present disclosure can be selected depending on various applications. For example, for hygiene materials such as diapers, from the viewpoint of flexibility and breathability, the basis weight of the multilayer nonwoven fabric in total is preferably 200 g/m$^2$ or less, more preferably 100 g/m$^2$ or less, further preferably 80 g/m$^2$ or less, and particularly preferably from 15 g/m$^2$ to 70 g/m$^2$. Basis weights of the surface layer (C-1), the back layer (C-2), and the intermediate layer (D-1) can be selected depending on various applications, and from the viewpoint of improving stretch characteristics, it is preferable that the basis weights of the surface layer, the back layer and the intermediate layer are the same or these difference is small. In a case in which the basis weight of the entire multilayer nonwoven fabric is constant, when the basis weights of the surface layer (C-1) and the back layer (C-2) are increased, the ratio of the long fibers of the thermoplastic polyurethane elastomer (A) to the entire multilayer nonwoven fabric is reduced, and stretchability is lowered. On the contrary, when the basis weights of the surface layer (C-1) and the back layer (C-2) are reduced, stretchability is improved. More specifically, by setting a ratio of the basis weight of the intermediate layer and the basis weight of the surface layer, in other words, the value of the intermediate layer (D-1)/the surface layer (C-1), and a ratio of the basis weight of the intermediate layer and the basis weight of the back layer, in other words, the value of the intermediate layer (D-1)/the back layer (C-2) preferably from 4 to 0.25, more preferably from 3 to 0.25, or further preferably from 2 to 0.5, excellent stretch characteristics tend to be obtained.

(Method of Producing Multilayer Nonwoven Fabric)

When the multilayer nonwoven fabric in the present disclosure is stacked and integrated, it is integrated by various known confounding methods. In a case in which stacking and integrating are performed offline, there may be an example of winding without confounding, but productivity can be improved by performing some prebonding by a known confounding method. Examples of such a confounding method include a method in which fibers are deposited on a moving belt and then compacted with a nip roll. At this time, it is desirable that the roll is heated so that some prebonding can be performed. Other examples of the prebonding method include a method using means such as needle punching, water jet, and ultrasonic waves, a method of heat embossing using an embossing roll, and a method using hot air through. It is preferable that all of them are confounded lighter than usual from the viewpoint of texture and stretchability after stacking. Such a confounding method may be performed alone or in combination of a plurality of confounding methods.

In a case in which the multilayer nonwoven fabric is thermally fusion bonded by thermal embossing, the emboss area ratio of the multilayer nonwoven fabric in the present disclosure is preferably from 5% to 20%, and more preferably from 10% to 20%. The non-embossed unit area is preferably from 0.5 mm$^2$ or more, and more preferably from 4 mm$^2$ to 40 mm$^2$. The non-embossed unit area is the maximum area of a quadrangle inscribed in emboss in a non-embossed portion of minimum units surrounded by embossed portions in all directions. Examples of the shape of the mark include a circle, an ellipse, an oval, a square, a rhombus, a rectangle, a square, and continuous shapes based on these shapes. When the embossed portion is formed so as to satisfy the embossed area ratio and the non-embossed unit area in such a range, a binding point is formed in the embossed portion and is substantially bonded between the long fibers of the thermoplastic polyurethane elastomer (A) and the long fibers of the thermoplastic resin (B), which are composing the mixed fiber spunbonded non-woven fabric, and between the spunbonded nonwoven fabric layer, including 50% by mass or more of the long fibers of the thermoplastic polyurethane elastomer (a), which is the intermediate layer, and the mixed fiber spunbonded nonwoven fabric layer. Further, in the mixed fiber spunbonded nonwoven fabric layer, between the embossed portions, the long fibers of the thermoplastic polyurethane elastomer (A) having elasticity and the long fibers (extensible fibers) of the thermoplastic resin (B) substantially less elastic than the long fibers of thermoplastic polyurethane elastomer (A), exist with a large degree of freedom. With such a structure, the mixed fiber spunbonded nonwoven fabric exhibits reduction of residual strain, excellent stretchability, and the like after stretching.

In a case in which the embossed area ratio is large, the stretchable range is small, but the stress is improved. Further, in a case in which the embossed area ratio is small, while the stretchable range can be increased, the embossed pitch tends to be large and the residual strain tends to be slightly large.

The multilayer nonwoven fabric in the present disclosure can be produced by a known method for producing a spunbonded nonwoven fabric, for example, the method described in JP-A No. 2004-244791, using the thermoplastic thermoplastic elastomer (A), the thermoplastic thermoplastic elastomer (a) and the thermoplastic resin (B). It can be manufactured by the method described in the above.

The multilayer nonwoven fabric in the present disclosure can be produced by using a nonwoven fabric producing apparatus having at least three-line spinning devices. The thermoplastic polyurethane elastomer (A) and the thermoplastic resin (B) composing the surface layer are melted by a separate extruder and then the melt is individually introduced to a spinneret (die) fitted with a large number of spinning holes (nozzles). After simultaneously discharging the thermoplastic polyurethane elastomer (A) and the thermoplastic resin (B) independently from different spinning holes, the long fibers of the thermoplastic polyurethane elastomer (A) and the long fibers of the thermoplastic resin (B) which are the melt-spun are introduced into the cooling chamber. After cooling the long fibers with cooling air in the cooling chamber, the long fibers are stretched (towed) by stretching air, and deposited on a moving collection surface to produce the mixed fiber spunbonded nonwoven fabric composing the surface layer.

Then, in another line, the thermoplastic polyurethane elastomer (a) are melted by a separate extruder and then the melt is introduced to a spinneret (die) fitted with a large number of spinning holes (nozzles). After discharging the thermoplastic polyurethane elastomer (a) from spinning holes, the melt-spun long fibers of the thermoplastic polyurethane elastomer (a) is introduced into the cooling chamber. After cooling the long fibers with cooling air in the cooling chamber, the long fibers are stretched (towed) by stretching air, and deposited on the surface of the mixed fiber spunbonded nonwoven fabric composing the surface layer to produce the intermediate layer.

Herein, in a case in which the intermediate layer is the mixed fiber spunbonded nonwoven fabric layer, the thermoplastic polyurethane elastomer (a) and a resin other than the thermoplastic polyurethane elastomer (a) are melted by a separate extruder, and the intermediate layer is produced in the same way as above.

Then, a multilayer nonwoven fabric can be produced by stacking the back layer composed of the mixed fiber spunbonded nonwoven fabric obtained in the same way as the mixed fiber spunbonded nonwoven fabric composing the above-mentioned surface layer on the the intermediate layer.

The melting temperatures of the thermoplastic polyurethane elastomer (A) and the thermoplastic resin (B) are not particularly limited as long as each temperature is equal to or higher than the softening temperature or melting temperature of each component and less than the thermal decomposition temperature, and can be determined by the raw materials used. The spinneret temperature depends on the raw material used, and for example, in a case in which a thermoplastic polyurethane elastomer (A) is used and a propylene polymer or an olefin polymer composition of a propylene polymer and HDPE is used as the thermoplastic resin (B), is preferably from 180°C to 240°C, more preferably from 190°C to 230°C, and further preferably from 200°C to 225°C.

The temperature of the cooling air is not particularly limited as long as the long fibers can be solidified, and for example, is preferably from 5°C to 50°C, more preferably from 10°C to 40°C, and further preferably from 15°C to 30°C. A stretching air velocity is preferably from 100 m/min to 10,000 m/min, and more preferably from 500 m/min to 10,000 m/min.

The multilayered fabric in the present disclosure may be further stretched. The multilayer nonwoven fabric may be confounded by the confounding method, preferably embossing, before the stretching.

The multilayered fabric in the present disclosure has a difference between an extensible recovery rate of the long fibers of the thermoplastic polyurethane elastomer (A) and an extensible recovery rate of the long fibers of the thermoplastic resin (B) in which the thermoplastic polyurethane elastomer (A) and the thermoplastic resin (B) compose the mixed fiber spunbonded nonwoven fabric layer composing the surface layer and the back layer. Therefore, when such stretching is performed, the stretched long fibers of the thermoplastic polyurethane elastomer (A) recover elastically and return to near the length before stretching, whereas the long fibers of the thermoplastic resin (B) remain close to the stretched state. Since the long fibers of the thermoplastic resin (B) are folded on the surface of the multilayer nonwoven fabric, the multilayer nonwoven fabric exhibits more bulkiness and excellent flexibility.

[Stretchable Multilayer Nonwoven Fabric]

The stretchable multilayer nonwoven fabric in the present disclosure is a multilayer nonwoven fabric having stretchability obtained by stretching the multilayer nonwoven fabric.

The stretchable multilayer nonwoven fabric in the present disclosure is a stretching product of the multilayer nonwoven fabric obtained by stretching the multilayer nonwoven fabric can be obtained by stretching the multilayer nonwoven fabric. The stretching method is not particularly limited, and conventionally known methods can be applied. The stretching method may be such that the multilayer nonwoven fabric is stretched partially or entirely. The stretching method may be such that the multilayer nonwoven fabric is stretched uniaxially or biaxially. Examples of the method of stretching the multilayer nonwoven fabric in a machine direction (MD) include a method of passing the partially fusion bonded mixed fibers through two or more pairs of nip rolls. At this time, the partially fusion bonded multilayer nonwoven fabric can be stretched by increasing the rotational speeds of the nip rolls in order in the machine direction. Gear stretching can also be performed using a gear stretching device shown in Fig. 1.

The lower limit of the stretching ratio is preferably 50% or more, more preferably 100% or more, and further preferably 200% or more. On the other hand, the upper limit of the stretching ratio is preferably 1000% or less, and more preferably 400% or less.

In the case of uniaxial stretching, the machine direction (MD) or a direction perpendicular thereto (CD) preferably satisfies the above stretching ratio. In the case of biaxial stretching, at least one of the machine direction (MD) or a direction perpendicular thereto (CD) preferably satisfies the above stretching ratio.

By stretching at the above stretching ratio, all the (long) fibers forming the intermediate layer and the mixed fiber spunbonded nonwoven fabric layer and the long fibers forming the mixed fiber spunbonded nonwoven fabric layer are plastically deformed to be extended (lengthened) in accordance with the above stretching ratio.

Therefore, in a case in which the stress is released after the multilayer nonwoven fabric is stretched, the (long) fibers forming the intermediate layer are elastically recovered, and the long fibers forming the mixed fiber spunbonded nonwoven fabric layer are folded without being elastically recovered. As a result, the multilayer nonwoven fabric exhibits bulkiness. Further, the long fibers forming the mixed fiber spunbonded nonwoven fabric layer tend to become thinner. Therefore, the long fibers can improve flexibility and tactile feeling, and can give an extension stop function.

[Fiber Product]

The fiber product in the present disclosure includes the multilayer nonwoven fabric or the stretchable multilayer nonwoven fabric in the present disclosure. The fiber product is not particularly limited, and examples thereof include absorbent articles such as disposable diapers and sanitary articles, hygiene articles such as sanitary masks, medical articles such as bandages, clothing materials, and packaging materials. The fiber product in the present disclosure preferably includes the multilayer nonwoven fabric or the stretchable multilayer nonwoven fabric in the present disclosure as an elastic member.

EXAMPLES

Hereinafter, the invention will be more specifically described with reference to Examples, but the invention is not limited to these Examples.
Physical property values and the like in Examples and Comparative Examples were measured by the following methods.

(1) Basis Weight [g/m$^2$]

Five test pieces of 250 mm (MD) × 200 mm (CD) were sampled from a nonwoven fabric. Five sampling points were arbitrarily selected. Subsequently, the mass (g) of each of the sampled test pieces was measured using a scale electric balance (manufactured by Kensei Co., Ltd.). The average value of the masses of the test pieces was determined. The determined average value was converted to the mass (g) per 1 m$^2$ to the first decimal place to give a basis weight [g/m$^2$] of each nonwoven fabric sample.

(2) Total Basis Weight [g/m$^2$]

A total of a basis weight [g/m$^2$] of each layer composing the multilayer nonwoven fabric was defined as a total basis weight [g/m$^2$].

(3) Spinnability

The number of yarn breaks during spinning of the spunbonded nonwoven fabric shown in the examples was measured and evaluated according to the following classification.

A: No yarn break.
B: the number of yarn breaks was from 1 to 9 times.
C: the number of yarn breaks was 10 times or more (intermittently occurs).

(4) Stress at 50% Extending, Stress at 50% Recovering, and Stretch Characteristics

Five test pieces of 50 mm (MD) × 200 mm (CD) were sampled from the multilayer nonwoven fabric. Five sampling points were arbitrarily selected. Subsequently, using a universal tensile tester (IM-201 type, manufactured by Intesco Co., Ltd.), each of the sampled test pieces was extended under conditions of a chuck distance of 100 mm, a tensile speed of 100 mm/min, and a stretching ratio of 100%, and then immediately recovered to the original length at the same speed. this operation was performed for 2 cycles, and stress in a case in which a stretching ratio became 50% during extending in the second cycle was defined as stress at 50% extending, and stress in a case in which a stretching ratio became 50% during recovering in the second cycle was defined as stress at 50% recovering. Subsequently, the value of [stress at 50% recovering ÷ stress at 50% extending] was measured as the measure of the stretch characteristics. The bigger the value of [stress at 50% recovering ÷ stress at 50% extending] is, the more excellent the stretch characteristics are.
In the present disclosure, a value that indicates stretch characteristics [stress at 50% recovering ÷ stress at 50% extending] (hereinafter, also referred to as "stretch characteristics (recovering/extending)") is required to be 0.32 or more, preferably 0.47 or more, and more preferably 0.50 or more.

For stretch characteristics, the average value was calculated for the above five points, and the third decimal place was rounded off.

(5) Low Temperature Heat Sealability

A multilayer nonwoven fabric and a nonwoven fabric peeled from a commercially available disposable diaper were stacked one by one, and a heat-sealed sample was prepared using a heat sealer under the conditions of a temperature of 160°C, a pressure of 0.5 MPa, and a time of 20 seconds. Three test pieces of 250 mm (MD) × 50 mm (CD) were collected from the prepared sample. Next, gum tape was attached to both sides of a part of the test piece (20 mm from the edge in the MD direction). Then, the gum tape was manually pulled in both directions of the test piece to peel off the layers of the multilayer nonwoven fabric by 100 mm. After that, each peeled layer was set in a constant speed extension type tensile tester, a tensile test was performed under the conditions of a chuck distance of 100 mm and a tensile speed of 100 mm/min, and the stress of the test piece was measured when the load applied to the test piece was maximized. The average value of the three test pieces was evaluated as low temperature heat sealability (hereinafter, also referred to as "low temperature heat sealability @ 160°C"). In a case in which the test piece was firmly fixed to the extent that the base material was destroyed, it was regarded as "material breakage". In addition, in a case in which the multilayer nonwoven fabric and the nonwoven fabric peeled from the commercially available disposable diaper were peeled off by the weight of the test piece, it was regarded as "no adhesion".

<Production of Thermoplastic Polyurethane Elastomer (A) (TPU (A-1))>

TPU (A-1), which is a thermoplastic polyurethane elastomer (A), was produced as follows.
Polyester polyol having a number average molecular weight of 1932: 71.7 parts by mass, 1,4-butanediol (hereinafter abbreviated as "BD"): 4.8 parts by mass, pentaerythritol tetrakis [3-(3,5-di)-t-Butyl-4-hydroxyphenyl) propionate] (hereinafter abbreviated as "antioxidant-1"): 0.3 parts by mass, and polycarbodiimide: 0.3 parts by mass were mixed, and MDI: 22.9 parts by mass was added to the mixture, and the mixture was stirred and mixed at a sufficiently high speed, and then reacted at 160°C for 1 hour. After pulverizing this reaction product, ethylene bisstearic acid amide: 0.8 parts by mass, triethylene glycol-bis- [3-(3,5-di-t-butyl-4-hydroxyphenyl) propionate] (hereinafter abbreviated as "antioxidant-2"): 0.5 parts by mass, and ethylene bisoleic acid amide (hereinafter abbreviated as "EOA"): 0.8 parts by mass were mixed with respect to the pulverized product: 100 parts by mass, and then the mixture was granulated by melt-kneaded with an extruder (set temperature: 210°C) to obtain TPU (A-1).
The physical properties of the obtained TPU (A-1) were storage elastic modulus at 23°C: 17.9 MPa, melting point (high melting point side) was 162.2°C, heat of fusion was 11.4 mJ/mg, and Shore A hardness: 82.

<Production of Another Thermoplastic Polyurethane Elastomer (TPU (A-2))>

TPU (A-2), which is not the thermoplastic polyurethane elastomer (A), but another thermoplastic polyurethane elastomer, was produced as follows.
Polyester polyol having a number average molecular weight of 1932: 63.8 parts by mass, BD: 7.3 parts by mass, antioxidant-1: 0.3 parts by mass, and polycarbodiimide: 0.3 parts by mass were mixed, and MDI: 28.3 parts by mass was added to the mixture, and the mixture was stirred and mixed at a sufficiently high speed, and then reacted at 160°C for 1 hour. After pulverizing this reaction product, ethylene bisstearic acid amide: 0.4 parts by mass, and antioxidant-2: 0.5 parts by mass were mixed with respect to the pulverized product: 100 parts by mass, and then the mixture was granulated by melt-kneaded with an extruder (set temperature: 210°C) to obtain TPU (A-2).
The physical properties of the obtained TPU (A-2) were storage elastic modulus at 23°C: 25.2 MPa, melting point (high melting point side) was 170.0°C, heat of fusion was 14.1 mJ/mg, and Shore A hardness: 86.

<Preparation of Thermoplastic Resin (B) used for Mixed fiber Spunbonded Nonwoven Fabric>

A thermoplastic resin composition (B-1), which is a thermoplastic resin (B), was obtained as follows.
92% by mass of a propylene homopolymer (hereinafter abbreviated as "hPP") having MFR (according to ASTM D1238, measured at a temperature of 230°C and a load of 2160 g) of 60 g/10 min, a density of 0.91 g / cm$^3$, and a melting point of 160°C and 8% by mass of high-density polyethylene (hereinafter abbreviated as "HDPE") having MFR (according to ASTM D1238, measured at a temperature of 230°C and a load of 2160 g) of 5 g/10 min, a density of 0.97 g/cm$^3$ and a melting point of 134°C were mixed and a thermoplastic resin composition (B-1) (hereinafter, also referred to as "hpp/HDPE") was prepared.

[Example 1]

<Production of Mixed Fiber Spunbonded Nonwoven Fabric (C-1-1) and (C-2-1)>

After melting the TPU (A-1) and the thermoplastic resin composition (B-1) independently using a 75 mmcp extruder and a 50 mmcp extruder, using a spunbonded nonwoven fabric molding machine having a spinneret, the TPU (A-1) and the thermoplastic resin composition (B-1) were melt-spun by the spunbond method under the conditions of both the resins temperature of 210°C, the cooling air temperature of 20°C, the stretching air velocity of 3160 m/min, and a web having a mixed fiber mass ratio of 55:45 with the long fibers A composed of the TPU (A-1) and the long fibers B composed of the thermoplastic resin composition (B-1) was deposited on the collection surface.

The spinneret had a nozzle pattern in which discharge holes of A-1 (long fibers A) and discharge holes of B-1 (long fibers B) were alternately arranged, and the nozzle diameter of the long fibers A was 0.75 mmcp, the nozzle diameter of the long fibers B was 0.6 mmcp, the pitch of the nozzles was 8 mm in the vertical direction and 11 mm in the horizontal direction, and the ratio of the number of nozzles was Nozzles for long fibers A:Nozzles for long fibers B = 1:1.45. The single-hole discharge amount of the long fibers A was 1.07 g/(min/hole), and the single-hole discharge amount of the long fibers B was 0.59 g/(min/hole).

The web composed of deposited mixed long fibers was pressed with a nip roll coated with non-adhesive material placed on a belt to obtain the mix fiber spunbonded nonwoven fabric (C-1-1) and (C-2-1). The basis weights of the obtained mixed fiber spunbonded nonwoven fabric (C-1-1) and (C-2-1) were 21.7 g/m$^2$.

<Production of Polyurethane Spunbonded Nonwoven Fabric (D-1-1)>

According to the producing method of the mixed fiber spunbonded nonwoven fabric (C-1-1) and (C-2-1), a polyurethane spunbonded nonwoven fabric (D-1-1) composed only of the TPU (A-1): the long fibers A and having the basis weight of 21.7 g/m$^2$ was obtained. The nozzle diameter of A-1 (long fibers A) was 0.6 mmcp. The stretching air velocity was 6280 m/min and the single-hole discharge amount of the long fibers A was 1.22 g/(min/hole).

<Production of Multilayer Nonwoven Fabric>

The mixed fiber spunbonded nonwoven fabric layers (C-1-1) and (C-2-1) were each positioned as outer layers (surface layer and back layer), and between them the polyurethane nonwoven fabric layer (D-1-1) was positioned as the intermediate layer to stack three layers in total. This was subjected to stacking and integrating processing by embossed under the following conditions to obtain a three-layer multilayer nonwoven fabric having an overall basis weight of 65.1 g/m$^2$. The embossing conditions are as follows. The heating temperature of both the embossed roll with a pattern of the embossed area ratio of 18% and the marked area of 0.41 mm$^2$ and the flat roll was set to 115°C, and the (C-1-1) surface was positioned on the embossed roll side, and the (C-1-2) surface was positioned on the flat roll side to perform embossing.

The obtained multilayer nonwoven fabric was evaluated by the above-mentioned method. The evaluation results are shown in Table 1.

[Example 2]

<Production of Mixed Fiber Spunbonded Nonwoven Fabric (C-1-2) and (C-2-2)>

After melting the TPU (A-1) and the thermoplastic resin composition (B-1) independently using a 75 mmcp extruder and a 50 mmcp extruder, using a spunbonded nonwoven fabric molding machine having a spinneret, the TPU (A-1) and the thermoplastic resin composition (B-1) were melt-spun by the spunbond method under the conditions of both the resins temperature of 210°C, the cooling air temperature of 20°C, the stretching air velocity of 3160 m/min, and a web having a mixed fiber mass ratio of 47:53 with the long fibers A composed of the TPU (A-1) and the long fibers B composed of the thermoplastic resin composition (B-1) was deposited on the collection surface. The spinneret had a nozzle pattern in which discharge holes of A-1 (long fibers A) and discharge holes of B-1 (long fibers B) were alternately arranged, and the nozzle diameter of the long fibers A was 0.75 mmcp, the nozzle diameter of the long fibers B was 0.6 mmcp, the pitch of the nozzles was 8 mm in the vertical direction and 11 mm in the horizontal direction, and the ratio of the number of nozzles was Nozzles for long fibers A:Nozzles for long fibers B = 1:1.45. The single-hole discharge amount of the long fibers A was 0.78 g/(min/hole), and the single-hole discharge amount of the long fibers B was 0.59 g/(min/hole).

The web composed of deposited mixed long fibers was pressed with a nip roll coated with non-adhesive material placed on a belt to obtain the mix fiber spunbonded nonwoven fabric (C-1-2) and (C-2-2). The basis weights of the obtained mixed fiber spunbonded nonwoven fabric (C-1-2) and (C-2-2) were 20.0 g/m$^2$.

<Production of Multilayer Nonwoven Fabric>

The mixed fiber spunbonded nonwoven fabric layers (C-1-2) and (C-2-2) were each positioned as outer layers (surface layer and back layer), and between them the polyurethane nonwoven fabric layer (D-1-1) was positioned as the intermediate layer to stack three layers in total. This was subjected to stacking and integrating processing by embossed under the same conditions as Example 1 to obtain a three-layer multilayer nonwoven fabric having an overall basis weight of 60 g/m$^2$.

The obtained multilayer nonwoven fabric was evaluated by the above-mentioned method. The evaluation results are shown in Table 1.

[Comparative Example 1]

<Production of Mixed Fiber Spunbonded Nonwoven Fabric (C-1-3) and (C-2-3)>

After melting the TPU (A-2) and the thermoplastic resin composition (B-1) independently using a 75 mmcp extruder and a 50 mmcp extruder, using a spunbonded nonwoven fabric molding machine having a spinneret, the TPU (A-2) and the thermoplastic resin composition (B-1) were melt-spun by the spunbond method under the conditions of both the resins temperature of 210°C, the cooling air temperature of 20°C, the stretching air velocity of 3160 m/min, and a web having a mixed fiber mass ratio of 47:53 with the long fibers A composed of the TPU (A-2) and the long fibers B composed of the thermoplastic resin composition (B-1) was deposited on the collection surface. The spinneret had a nozzle pattern in which discharge holes of A-2 (long fibers A) and discharge holes of B-1 (long fibers B) were alternately arranged, and the nozzle diameter of the long fibers A was 0.75 mmcp, the nozzle diameter of the long fibers B was 0.6 mmcp, the pitch of the nozzles was 8 mm in the vertical direction and 11 mm in the horizontal direction, and the ratio of the number of nozzles was Nozzles for long fibers A:Nozzles for long fibers B = 1:1.45. The single-hole discharge amount of the long fibers A was 0.78 g/(min/hole), and the single-hole discharge amount of the long fibers B was 0.59 g/(min/hole).

The web composed of deposited mixed long fibers was pressed with a nip roll coated with non-adhesive material placed on a belt to obtain the mix fiber spunbonded nonwoven fabric (C-1-3) and (C-2-3). The basis weights of the obtained mixed fiber spunbonded nonwoven fabric (C-1-3) and (C-2-3) were 20.0 g/m$^2$.

<Production of Polyurethane Spunbonded Nonwoven Fabric (D-1-2)>

According to the method described in Example 1, a polyurethane spunbonded nonwoven fabric (D-1-2) composed only of the TPU (A-2): the long fibers A and having the basis weight of 20.0 g/m$^2$ was obtained. The nozzle diameter of A-2 (long fibers A) was 0.6 mmcp. The stretching air velocity was 4490 m/min and the single-hole discharge amount of the long fibers A was 1.22 g/(min/hole).

<Production of Multilayer Nonwoven Fabric>

The mixed fiber spunbonded nonwoven fabric layers (C-1-3) and (C-2-3) were each positioned as outer layers (surface layer and back layer), and between them the polyurethane nonwoven fabric layer (D-1-2) was positioned as the intermediate layer to stack three layers in total. This was subjected to stacking and integrating processing by embossed under the same conditions as Example 1 to obtain a three-layer multilayer nonwoven fabric having an overall basis weight of 60 g/m$^2$.

The obtained multilayer nonwoven fabric was evaluated by the above-mentioned method. The evaluation results are shown in Table 1.

[Comparative Example 2]

<Production of Multilayer Nonwoven Fabric>

The mixed fiber spunbonded nonwoven fabric layers (C-1-2) and (C-2-2) were each positioned as outer layers (surface layer and back layer), and between them the mixed fiber spunbonded nonwoven fabric layer produced by the same method as (C-1-2) and (C-2-2) was positioned as the intermediate layer to stack three layers in total. This was subjected to stacking and integrating processing by embossed under the same conditions as Example 1 to obtain a three-layer multilayer nonwoven fabric having an overall basis weight of 60 g/m$^2$.

The obtained multilayer nonwoven fabric was evaluated by the above-mentioned method. The evaluation results are shown in Table 1.

[Comparative Example 3]

<Production of Mixed Fiber Spunbonded Nonwoven Fabric (C-1-4) and (C-2-4)>

After melting the TPU (A-2) and the thermoplastic resin composition (B-1) independently using a 75 mmcp extruder and a 50 mmcp extruder, using a spunbonded nonwoven fabric molding machine having a spinneret, the TPU (A-2) and the thermoplastic resin composition (B-1) were melt-spun by the spunbond method under the conditions of both the resins temperature of 210°C, the cooling air temperature of 20°C, the stretching air velocity of 3160 m/min, and a web having a mixed fiber mass ratio of 47:53 with the long fibers A composed of the TPU (A-2) and the long fibers B composed of the thermoplastic resin composition (B-1) was deposited on the collection surface. The spinneret had a nozzle pattern in which discharge holes of A-2 (long fibers A) and discharge holes of B-1 (long fibers B) were alternately arranged, and the nozzle diameter of the long fibers A was 0.75 mmcp, the nozzle diameter of the long fibers B was 0.6 mmcp, the pitch of the nozzles was 8 mm in the vertical direction and 11 mm in the horizontal direction, and the ratio of the number of nozzles was Nozzles for long fibers A:Nozzles for long fibers B = 1:1.45. The single-hole discharge amount of the long fibers A was 0.78 g/(min/hole), and the single-hole discharge amount of the long fibers B was 0.59 g/(min/hole).
The web composed of deposited mixed long fibers was pressed with a nip roll coated with non-adhesive material placed on a belt to obtain the mix fiber spunbonded nonwoven fabric (C-1-4) and (C-2-4). The basis weights of the obtained mixed fiber spunbonded nonwoven fabric (C-1-4) and (C-2-4) were 20.0 g/m$^2$.

<Production of Multilayer Nonwoven Fabric>

The mixed fiber spunbonded nonwoven fabric layers (C-1-4) and (C-2-4) were each positioned as outer layers (surface layer and back layer), and between them the mixed fiber spunbonded nonwoven fabric layer produced by the same method as (C-1-3) and (C-2-3) was positioned as the intermediate layer to stack three layers in total. This was subjected to stacking and integrating processing by embossed under the same conditions as Example 1 to obtain a three-layer multilayer nonwoven fabric having an overall basis weight of 60 g/m$^2$.
The obtained multilayer nonwoven fabric was evaluated by the above-mentioned method. The evaluation results are shown in Table 1.

[Table 1]

| | | | | Example 1 | | Example 2 | | Comparative Example 1 | | Comparative Example 2 | | Comparative Example 3 | |
|---|---|---|---|---|---|---|---|---|---|---|---|---|---|
| Composition of Nonwoven Fabric | Outer Layer | Resin | - | Thermoplastic Polyurethane Elastomer (A) | Thermoplastic Resin (B) | Thermoplastic Polyurethane Elastomer (A) | Thermoplastic Resin (B) | Another Thermoplastic Polyurethane Elastomer | Thermoplastic Resin (B) | Thermoplastic Polyurethane Elastomer (A) | Thermoplastic Resin (B) | Another Thermoplastic Polyurethane Elastomer | Thermoplastic Resin (B) |
| | | | | TPU(A-1) | hPP /HDPE | TPU(A-1) | hPP /HDPE | TPU(A-2) | hPP /HDPE | TPU(A-1) | hPP /HDPE | TPU(A-2) | hPP /HDPE |
| | | Ratio | [%] | 55 | 45 | 47 | 53 | 47 | 53 | 47 | 53 | 47 | 53 |
| | | Basis Weight | [g/m²] | 21.7 | | 20.0 | | 20.0 | | 20.0 | | 20.0 | |
| | | Spinnability | - | A | | A | | A | | A | | A | |
| | Intermediate Layer | Resin | - | Thermoplastic Polyurethane Elastomer (a) | | Thermoplastic Polyurethane Elastomer (a) | | Another Thermoplastic Polyurethane Elastomer | | Thermoplastic Polyurethane Elastomer (a) | Thermoplastic Resin (B) | Another Thermoplastic Polyurethane Elastomer | Thermoplastic Resin (B) |
| | | | | TPU(A-1) | | TPU(A-1) | | TPU(A-2) | | TPU(A-1) | hPP /HDPE | TPU(A-2) | hPP /HDPE |
| | | Ratio | [%] | 100 | | 100 | | 100 | | 47 | 53 | 47 | 53 |
| | | Basis Weight | [g/m²] | 21.7 | | 20.0 | | 20.0 | | 20.0 | | 20.0 | |
| | | Spinnability | - | A | | A | | A | | A | | A | |
| Property of Elastomer | | Melting Point (high melting point side) | [°C] | 162.2 | | 162.2 | | 170.0 | | 162.2 | | 170.0 | |
| | | Heat of Fusion | [mJ /mg] | 11.4 | | 11.4 | | 14.1 | | 11.4 | | 14.1 | |

| Property of Nonwoven Fabric | | | | | | |
|---|---|---|---|---|---|---|
| E'@23°C | [MPa] | 17.9 | 17.9 | 25.2 | 17.9 | 25.2 |
| Shore A Hardness | — | 82 | 82 | 86 | 82 | 86 |
| Total Basis Weight | [g/m²] | 65.1 | 60.0 | 60.0 | 60.0 | 60.0 |
| Stress at 50% Extending | [N/50mm] | 0.74 | 0.56 | 1.10 | 0.65 | 1.00 |
| Stress at 50% Recovering | [N/50mm] | 0.42 | 0.29 | 0.51 | 0.20 | 0.29 |
| Stretch Characteristics (Recovering/Extending) | — | 0.57 | 0.52 | 0.46 | 0.31 | 0.29 |
| Low Temperature Heat Sealability @160°C | — | Material Breakage | Material Breakage | Not Measurable (No Adhesion) | Material Breakage | Not Measurable (No Adhesion) |

As can be seen from Table 1, in Examples in which the storage elastic modulus of the thermoplastic polyurethane elastomer (A) and the thermoplastic polyurethane elastomer (a) was 25.0 MPa or less, and the intermediate layer which is the spunbonded nonwoven fabric layer including 50% by mass or more of a long fiber of a thermoplastic polyurethane elastomer (a) was positioned, the multilayer nonwoven fabric had excellent stretch characteristics and low temperature heat sealability. On the other hand, in the multilayer nonwoven fabric of the comparative example, at least one of stretch characteristics and low temperature heat sealability was inferior to that of the example.

The disclosure of Japanese Patent Application 2018-193725 is incorporated herein by reference in its entirety. All publications, patent applications, and technical standards mentioned in the present specification are incorporated herein by reference to the same extent as if each individual publication, patent application, or technical standard was specifically and individually indicated to be incorporated by reference.

Industrial Applicability

The multilayer nonwoven fabric in the present disclosure is excellent in stretchability and low temperature heat sealability, and can be suitably used for medical materials, hygiene materials, industrial materials, and the like by taking advantage of these characteristics. Specific examples of hygiene materials include absorbent articles such as disposable diapers and sanitary napkins. For deployable disposable diapers or pants-type disposable diapers, it can be suitably used for parts such as top sheets, back sheets, waistbands (extension tapes, side flaps), fastening tapes, three-dimensional gathers, leg cuffs, and side panels of pants-type disposable diapers. As sanitary napkins, it can be suitably used for parts such as top sheets, back sheets, wings, and side leakage prevention cuffs. By using the article in the present disclosure in these parts, it is possible to follow the movement of the wearer and fit the wearer's body.

Furthermore, in the heat sealing process in the production of hygiene materials such as disposable diapers and sanitary napkins, the production can be speeded up and the flexible texture can be maintained by being able to heat seal at low temperature.

For medical materials, it can be used in various parts by taking advantage of its moderate stretchability as a ship base cloth, good touch, followability to body movements, and skin care properties, and it will lead to a healing effect. Similarly, the base material for wound treatment has an appropriate stretchability and can be expected to lead to an action of accelerating the recovery of the wound since the adhesion to the affected part is enhanced. Further, the multilayer nonwoven fabric in the present disclosure has moderate breathability similar to ordinary nonwoven fabrics and also has excellent stretchability, so that it can be expected to be used for parts that require breathability and stretchability, such as disposable surgical gowns, caps and movable joints such as arms, elbows, shoulders, and sleeves of rescue gowns.

**Claims**

1.    A multilayer nonwoven fabric, comprising:
      a surface layer, an intermediate layer, and a back layer, in this order, wherein:

      the surface layer and the back layer are each independently a spunbonded nonwoven layer comprising a long fiber of a thermoplastic polyurethane elastomer (A) and a long fiber of a thermoplastic resin (B),
      the intermediate layer is a spunbonded nonwoven layer comprising 50% by mass or more of a long fiber of a thermoplastic polyurethane elastomer (a), and
      a storage elastic modulus of the thermoplastic polyurethane elastomer (A) and a storage elastic modulus of the thermoplastic polyurethane elastomer (a) are each independently 25.0 MPa or less.

2.    The multilayer nonwoven fabric according to claim 1, wherein the intermediate layer is a spunbonded nonwoven layer comprising 80% by mass or more of the long fiber of the thermoplastic polyurethane elastomer (a).

3.    The multilayer nonwoven fabric according to claim 1 or 2, wherein a melting point of the thermoplastic polyurethane elastomer (A) and a melting point of the thermoplastic polyurethane elastomer (a) are each independently 165°C or less.

4.    The multilayer nonwoven fabric according to any one of claims 1 to 3, wherein a heat of fusion of the thermoplastic polyurethane elastomer (A) and a heat of fusion of the thermoplastic polyurethane elastomer (a) are each independently 14 mJ/mg or less.

5.    The multilayer nonwoven fabric according to any one of claims 1 to 4, wherein a mixed fiber mass ratio of the long fiber of the thermoplastic polyurethane elastomer (A) and the long fiber of a thermoplastic resin (B) in the surface layer or the back layer is from 10:90 to 60:40, where (A) + (B) = 100% by mass.

6. The multilayer nonwoven fabric according to claim 5, wherein the mixed fiber mass ratio is from 50:50 to 60:40 on a mass basis.

7. The multilayer nonwoven fabric according to any one of claims 1 to 6, wherein the thermoplastic resin (B) comprises a polypropylene polymer.

8. The multilayer nonwoven fabric according to any one of claims 1 to 7, wherein the thermoplastic resin (B) consists of a polypropylene polymer and a high density polyethylene, a content of the polypropylene polymer is from 80% by mass to 99% by mass with respect to a total of the polypropylene polymer and the high density polyethylene, and a content of the high density polyethylene is from 1% by mass to 20% by mass with respect to a total of the polypropylene polymer and the high density polyethylene.

9. A stretchable multilayer nonwoven fabric obtained by drawing the multilayer nonwoven fabric according to any one of claims 1 to 8.

10. A fiber product comprising the multilayer nonwoven fabric according to any one of claims 1 to 8 or the stretchable multilayer nonwoven fabric according to claim 9.

11. An absorbent article comprising the multilayer nonwoven fabric according to any one of claims 1 to 8 or the stretchable multilayer nonwoven fabric according to claim 9.

12. A sanitary mask comprising the multilayer nonwoven fabric according to any one of claims 1 to 8 or the stretchable multilayer nonwoven fabric according to claim 9.

FIG. 1

**INTERNATIONAL SEARCH REPORT**

International application No.

PCT/JP2019/040477

### A. CLASSIFICATION OF SUBJECT MATTER
Int.Cl. D04H3/16(2006.01)i, A41D13/11(2006.01)i, B32B5/26(2006.01)i, B32B27/40(2006.01)i

According to International Patent Classification (IPC) or to both national classification and IPC

### B. FIELDS SEARCHED

Minimum documentation searched (classification system followed by classification symbols)
Int.Cl. D04H1/00-18/04, B32B1/00-43/00, A41D13/11, A61F13/15-13/84

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/143833 A1 (MITSUI CHEMICALS, INC.) 15 September 2016, example 2, paragraph [0122] & EP 3255191 A1, example 2, paragraphs [0107]–[0108] & US 2018/0051405 A1 & KR 10-2017-0113656 A & CN 107429458 A | 1–12 |
| A | WO 2008/108230 A1 (MITSUI CHEMICALS, INC.) 12 September 2008, claims, examples 2–4, paragraphs [0119]–[0124] & EP 2123441 A1, claims, examples 2–4, paragraphs [0121]–[0126] & US 2010/0093244 A1 | 1–12 |

☒ Further documents are listed in the continuation of Box C.　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 November 2019 (22.11.2019) | 03 December 2019 (03.12.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/040477

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2014-95161 A (3M INNOVATIVE PROPERTIES COMPANY) 22 May 2014, claims, paragraphs [0061]-[0065], examples & WO 2014/074788 A1, claims, page 10, line 7 to page 11, line 3, examples & US 2015/0299918 A1 & EP 2917393 A1 & CN 104769172 A | 1-12 |
| P, X | JP 2018-178307 A (MITSUI CHEMICALS, INC.) 15 November 2018, examples, paragraphs [0071]-[0078], [0088] (Family: none) | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07503502 A
- JP 2004244791 A
- WO 2008108230 A
- JP 2004197291 A
- JP 2008108230 A
- WO 2017006972 A
- JP 2005205744 A
- JP 2014502315 A
- JP 2018193725 A

**Non-patent literature cited in the description**

- **A. ZAMBELLI et al.** *Macromolecules,* 1973, vol. 6, 925